# EUROPEAN PATENT SPECIFICATION

(11) **EP 0 375 826 B1**
(45) Date of publication and mention of the grant of the patent: **03.02.1993**
(21) Application number: 89103902.6
(22) Date of filing: 06.03.1989
(51) Int. Cl.: F16K 11/087

(54) **Ball valve**
Kugelventil
Soupape sphérique

(30) Priority: 30.12.1988 IT 2317288
(43) Date of publication of application: 04.07.1990
(73) Proprietor: FIMCIM S.r.l., I-20121 Milano (IT)
(72) Inventor: Cimberio, Renzo, I-28017 S. Maurizio d'Opaglio (Novara) (IT)
(74) Representative: de Dominicis, Silvia Giovanna

(56) References cited:
- AT-B- 387 268
- CH-A- 472 616
- FR-A- 2 366 502
- GB-A- 2 138 110

## Description

The present invention relates to a ball valve. Although, in the text, reference is made to ball valves, the same expression is also intended to refer to ball cocks, which have substantially the same structure.

Ball valves are commonly found in gas and water supply systems both of the domestic and industrial type. These valves comprise a spherical obturator which has an axial opening (in the case of straight valves) or an elbow-shaped opening (in the case of elbow valves) and is accommodated between two seals inside a chamber which communicates with the two unions provided at the ends of the valve body. The spherical obturator can be actuated by means of a rod supporting externally an operating handle.

As is well-known, ball valves are used as shut-off valves or opening/closing valves. This is due mainly to two reasons. The first reason is to do with the design and consists in the fact that the change-over from the open position to the closed position, and vice versa, is performed by means of a brief rotation of the spherical obturator through 90°. The movement, moreover, is extremely smooth and there are no intermediate positions. Thus it would be somewhat difficult to make frequent intermediate adjustments of a certain accuracy. The said adjustments would, moreover, be somewhat unstable. The second reason is to do with the operation and consists in the fact that, when the spherical obturator is set to intermediate positions, the annular seals are exposed partially to the through-flow. In the case of a hot fluid, the temperature of the said fluid would result in various thermal stresses on the various parts of the annular seals, as a result of which, upon various subsequent rotations of the ball valve, the sharp edges on the said valve, produced by the through-hole, would cause pinching of the seals, irreversibly damaging the sealing action of the said seals.

Although extremely advantageous from the point of view of design, being easily and rapidly operated and extremely reliable as regards sealing action, the known ball valves cannot consequently be used as proper regulator valves. The said valves are therefore excluded from numerous areas of application.

In AT-B-387 268 is disclosed a ball valve according to the features of the preamble of independent claims 1 and 3 whose spherical obturator in addition to a conventional through-hole is provided with an additional hole connecting the through-hole with an overflow room within the chamber housing the spherical obturator.

The overflow room is in turn connected with the valve inlet union through connecting openings. During the closing rotation of the obturator the through-hole is therefore connected - via overflow room and connecting openings - with the inlet union, so that a pressure compensation occurs. The disclosed ball valve is designed for avoiding water hammering.

The object of the present invention is to provide a ball valve which is able to allow variation of the supply flow according to a predetermined ratio with respect to the full throughput of the valve, and in which stresses on partial areas of the seals in both the regulatory positions of the obturator are avoided.

The object of the present invention also includes the creation of a ball valve which retains the same dimensions as conventional valves and the additional manufacturing cost of which is so small as to be entirely negligible in practice.

The objects of the present invention are achieved, in a ball valve with a straight or elbow-shaped body, in that the said valve has the features described in Claim 1 in the case of valves with a straight body and in Claim 3 in the case of valves with an elbow-shaped body.

The ball valves according to the invention offer various important advantages.

First of all, the valves proposed may now be used as regulator valves, thereby opening up a very large number of new areas of application for the said valves. Such areas include, for example, heating systems, in which the proposed valves may be used to control the incoming supply of hot water, the said valves being able to switch from full throughput to a reduced throughput, of 50% for example. Such uses are advantageous, for example, in countries with a mild climate, such as for example southern Italy, Greece, etc., where such regulation is undoubtedly regarded as being highly desirable. Other areas of application may consist, for example, in the regulation of the throughputs of mixing fluids, in chemical plants for example. In such plants, any regulation operations involving various stages of subdivision of the flow may advantageously be performed by placing two or more valves according to the invention in series. A further advantage of the said valves consists in the fact that in elbow valves only one additional hole needs to be provided, whereas in valves with a straight body, as well as the additional hole in the ball valve, only one or a few openings bypassing one of the two seals are required. The said openings can be formed directly during pressing of the obturator seat inside the valve body and therefore do not involve any specific additional manufacturing costs. Another advantage of the proposed valves lies in the fact that the seals are never subjected, on their circumference, to thermal stresses of varying intensity. Consequently, a perfect sealing action is ensured, exactly as in conventional ball valves. Yet another advantage of the proposed valves lies in the fact that the same are provided with set positions for closure and the two possible supply throughputs, thereby avoiding with certainty undesired intermediate positions.

Other characteristic features, advantages and details of the ball valves according to the invention will emerge more clearly from the following description with reference to the accompanying drawing, in which two preferred embodiments are illustrated, one relating to a valve with a straight body and the other relating to a valve with an elbow-shaped body.

The drawings show the following in diagrammatic form:
in Fig. 1, a vertical middle section, with the parts exploded, of a ball valve with a straight body according to the invention;
in Fig. 1b, a side view of Fig. 1 in the direction of the arrow f;
in Figs. 2, 3 and 4, respectively, a vertical middle section through the ball valve with a straight body according to Fig. 1, and more precisely in the closed position in Fig. 2, in the open position with full flow in Fig. 3 and in the open position with partial flow in Fig. 4;
in Figs. 2a, 3a and 4a, a cross-section along the plane Y-Y of Figs. 2, 3 and 4, respectively;
in Figs. 2b, 3b and 4b, a cross-section, along the plane X-X of Figs. 2, 3 and 4, respectively; and
in Figs. 2c, 3c and 4c, a plan view of the pommel grip shown in Figs. 2, 3 and 4, respectively;
Fig. 5 shows a vertical middle section through an elbow valve according to the invention, in an exploded view;
Figs. 6, 7 and 8 show, respectively, a vertical middle section through the valve shown in Fig. 5, with the spherical obturator in the closed position in Fig. 6, in the full-flow position in Fig. 7 and in the reduced-flow position in Fig. 8, respectively;
Figs. 6a, 7a and 8a a cross-section along the plane Y-Y of Figs. 6, 7 and 8, respectively;
Figs. 6b, 7b and 8b a section along the plane X-X of Figs. 6, 7 and 8 respectively; and
Figs. 6c, 7c and 8c a plan view of the pommel grip shown in Figs. 6, 7 and 8, respectively.

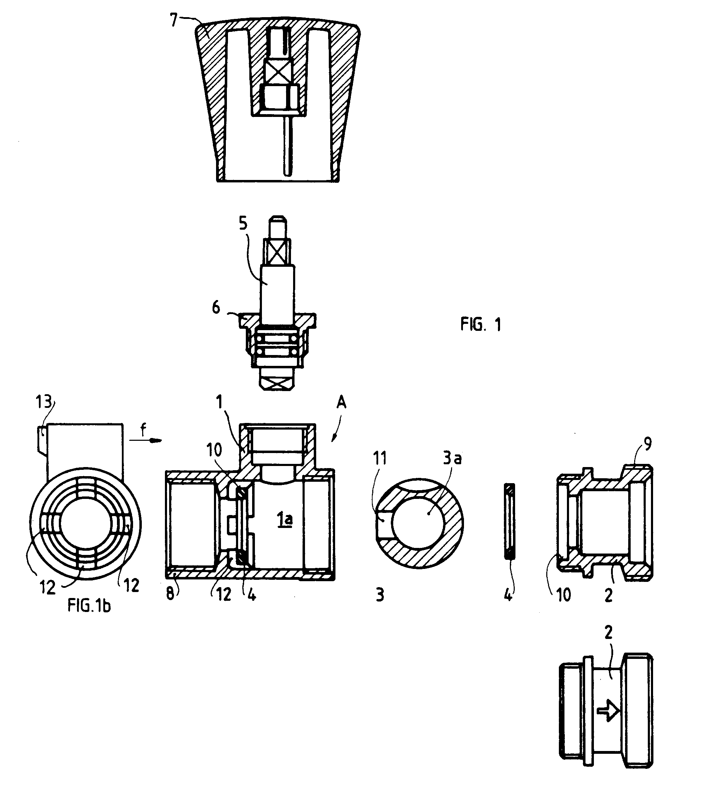

Reference will be made initially to the ball valve with a straight body shown in Figs. 1 to 4. The valve is indicated in its entirety by A. The said valve comprises a valve body 1 with a completion sleeve 2. 3 denotes a spherical obturator with a through-hole 3a, while 4 denotes the two seals cooperating with the said obturator, 5 the rod for operating the spherical obturator, 6 the stopper supporting the rod inside the valve body 1 and 7 a pommel grip for operating the obturator 3. The latter is accommodated inside the chamber by means of the valve body 1, the end unions of which are indicated by 8 and 9, respectively. The said unions may obviously have any shape required, either of the male or female type, or, in the case of a cock, one end may be configured in the manner of a supply nozzle. Inside the valve body 1 and inside the completion sleeve 2, seats are denoted by 10, these seats being per se conventional and intended to accommodate seals 4 which are also of the conventional type. Up to this point, the ball valve described has a conventional design.

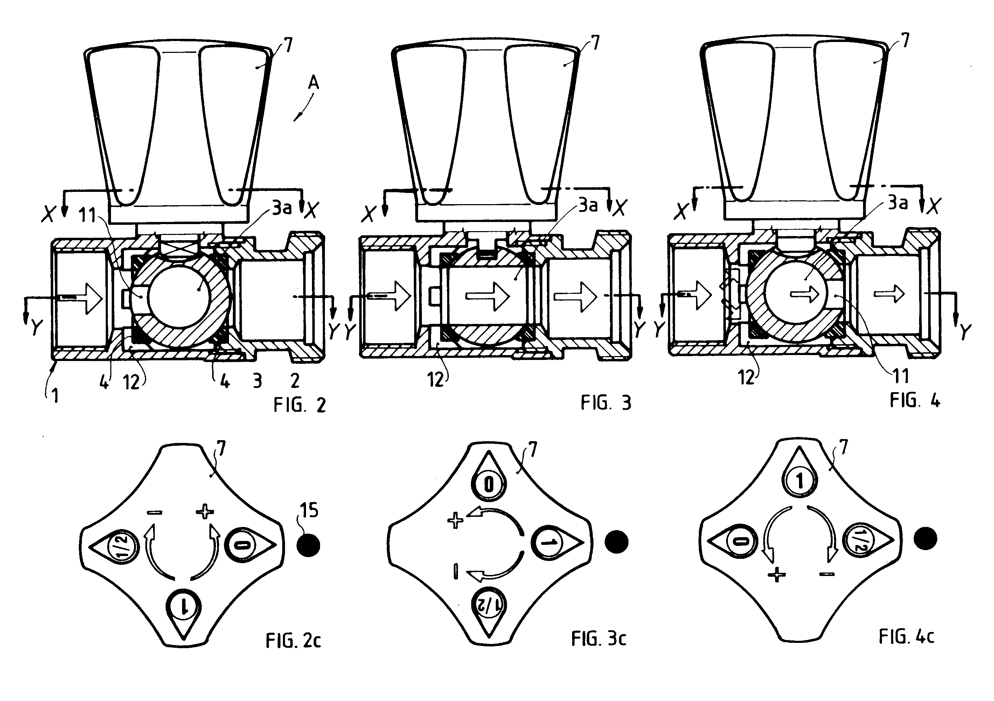

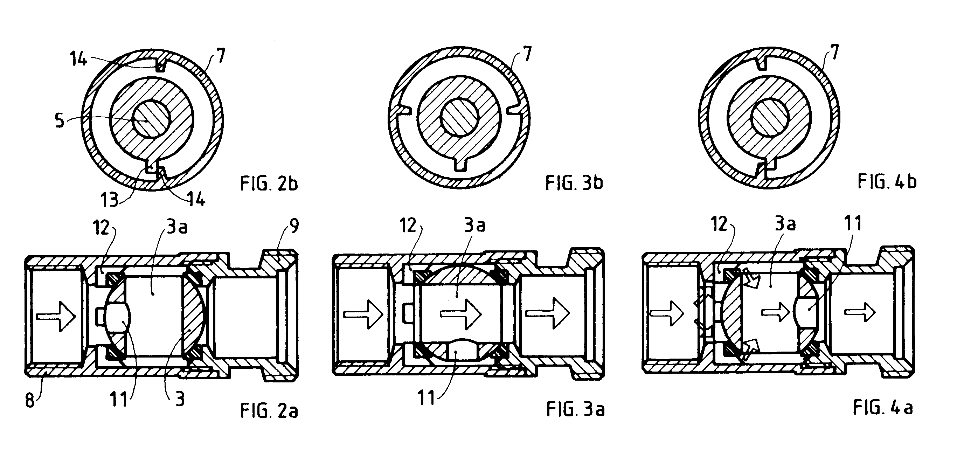

However, according to the invention, an additional hole 11 for the supply of a partial flow is provided in the spherical obturator. The hole 11 therefore has a small section compared to the through-hole 3a and is arranged perpendicularly relative to the latter and, more precisely, with its axis in the plane perpendicular relative to the axis of rotation of the spherical obturator 3. In the drawing, adjacent to the seat 10 for the seal 4 inside the valve body 1, provision is made for openings bypassing the said seat, which openings are indicated by 12 and, in the example shown, four of which are provided in a cross-type arrangement, as can be seen from the side view of Fig. 1b in the direction of the arrow f in Fig. 1. In the same figure, 13 denotes an end-of-travel rib cooperating with stops 14 inside the pommel grip 7 (Figs. 2b, 3b and 4b).

With the arrangement according to the invention, it is therefore possible to obtain the three operating conditions illustrated in detail in Figs. 2, 2a, 2b and 2c showing the valve in the closed position, in Figs. 3, 3a, 3b and 3c showing the valve in the open position with full flow, and in Figs. 4, 4a, 4b and 4c showing the valve in the semi-open position, or with partial flow. This partial-flow operation is made possible by the simultaneous presence of the additional hole 11 with a reduced aperture, perpendicular relative to the through-hole 3a, and the presence of the openings 12 bypassing the seal 4 inside the valve body 1, on the fluid inlet side, as can be seen from the various figures, in which the flow movement is indicated by arrows. While in the closed and full-flow position, the presence of the said bypass openings 12 is completely irrelevant, since the ball valve behaves in the manner of conventional valves, when the ball valve is in the position shown in Figs. 4 and 4a, a continuous flow is created between the unions 8 and 9 via the said openings 12 and the said additional hole 11. The individual positions of the spherical obturator 3 are easily discernible externally, for example, with the respective three different operating positions being shown on the pommel grip 7 of the valve (Figs. 2c, 3c and 4c), the black dot 15, on the valve body 1 for example, representing the reference point for reading off the respective position of the spherical obturator 3.

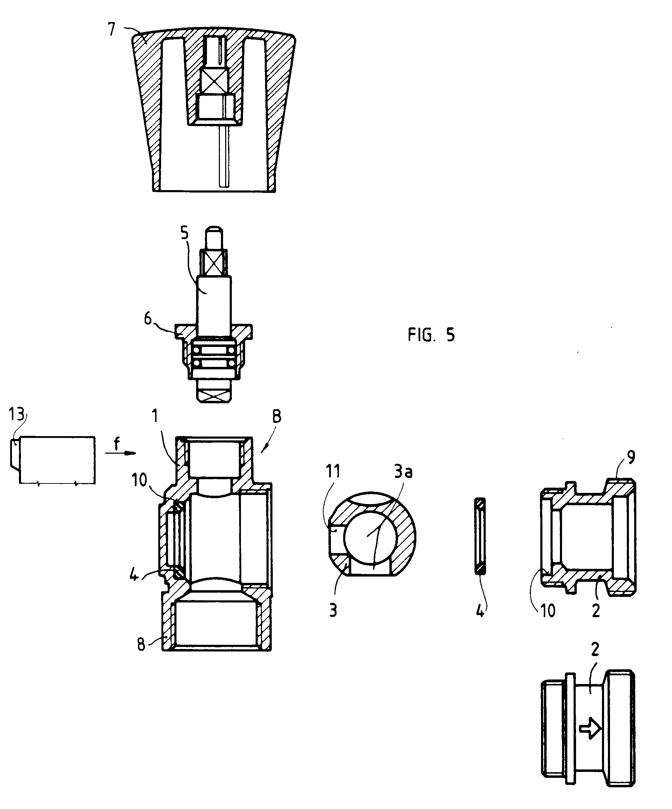

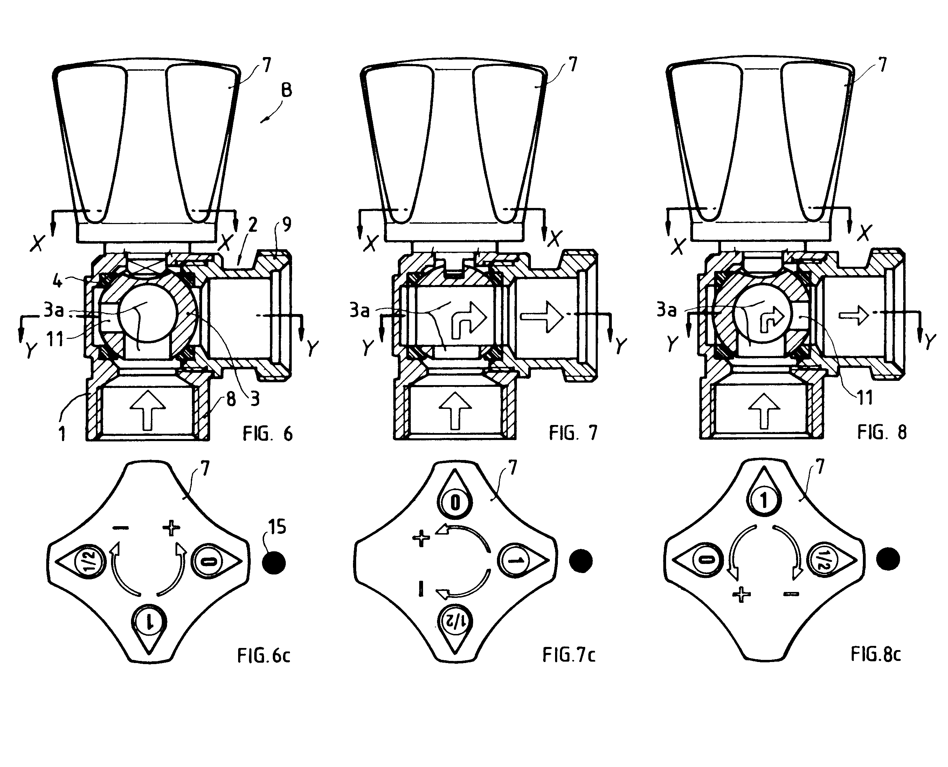

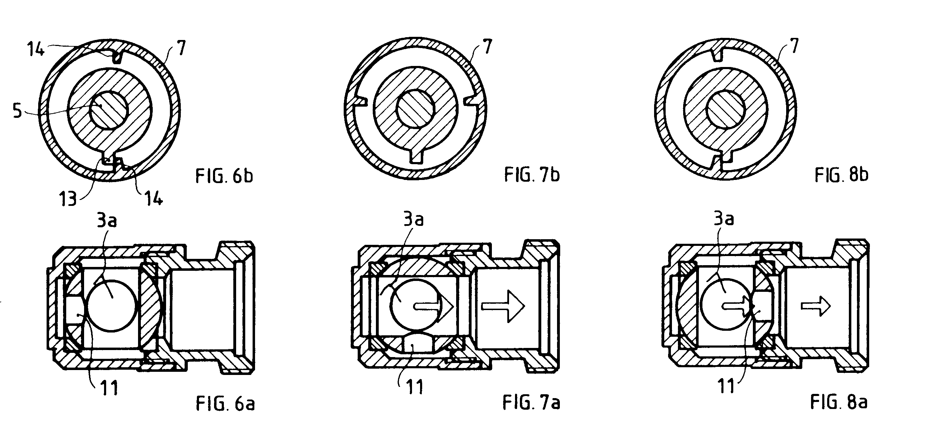

In ball valves with an elbow-shaped body B, the modification according to the invention is limited to the provision of the additional hole with a reduced aperture 11 arranged perpendicularly relative to the conventional through-hole 3a. In Figs. 5 to 8, the individual components or parts of the same are indicated by the same references as in Figs. 1 to 4. In this embodiment also, the flow pattern in the various positions is indicated by arrows. In the full-flow position shown in Fig. 7, the fluid flow is exactly the same as that in conventional valves. From this position, by further rotating the spherical obturator 3 through 90°, the additional hole with a reduced aperture 11 is brought opposite the outlet union 9, thereby resulting in a fluid supply with a reduced throughput.

The various positions of the spherical obturator 3 in the three operating positions of the straight and right-angled ball valves proposed are clearly visible from the relevant figures, thus making a detailed and repetitive description of such operation superfluous.

If, in the plant in question, it is necessary for the throughput to be divided up in several steps, it will therefore be sufficient to insert two or more valves according to the invention in series. In such a case, each valve will supply its own subdivided throughput ratio according to the incoming flow.

It will be clear from the structural and functional description given above that, with the ball valves according to the invention, the object forming the basis of the said invention has been effectively achieved, and the advantages mentioned in the introductory part are obtained. In practice, the diameters, or the apertures, of the additional holes with a reduced flow passage, and also the number and the configuration of the openings bypassing the seal on the inlet side of the spherical obturator, may be varied as required, without thereby going outside the protective scope of the present invention. The operating lever also, shown in the form of a pommel grip, may in practice have any desired design.

With respect to the valve body, the scope of the present invention also provides for the use of any embodiment of the same.

## Claims

1. Ball valve comprising:
- a valve body (1) having internally a chamber accomodating a spherical obturator (3); said obturator (3) being provided with a through-hole (3a) and with an additional hole (11) for reduced supply; said additional hole (11) being arranged perpendicularly relative to said through-hole (3a), having a smaller diameter compared to the diameter of said through-hole (3a) and connecting the latter with the external surface of the spherical obturator (3);
- a fluid inlet union (8) and a fluid outlet union (9),
- opposing seals supporting said obturator (3a);
- a rod (5) for rotational operating said obturator (3a), said operator (5) being provided with an associated external operating handle (7); and
- at least one opening (12) in said valve body (1) bypassing the obturator seal on said fluid inlet union (8), **characterized** in that
- the valve body (1) is straight;
- the additional hole (11) also being arranged perpendicularly relative to the axis of rotation of the obturator (3) and;
- said obturator (3) can be rotated such, that said additional hole (11) is directly connected with the outlet union (9), whereby the fluid entering the inlet union (8) passes through the said at least one opening (12) into said through-hole (3a), located in a transverse position relative to the direction of flow, and from said through-hole (3a) into the outlet union (9) via said additional hole (11).

2. Ball valve according to Claim 1, **characterized** in that four openings (12) bypassing the adjacent seal (4) of the spherical obturator (3) are provided on the fluid inlet side (8).

3. Ball valve, comprising:
- a valve body (1) having internally a chamber accommodating a spherical obturator (3); said obturator (3) being provided with an elbow shaped through-hole (3a) and with an additional hole (11) for reduced supply; said additional hole (11) being arranged perpendicularly relative to said through-hole (3a), having a small diameter compared to the diameter of said through-hole (3a) and connecting the latter with the external surface of the spherical obturator (3);
- a fluid inlet union (8) and a fluid outlet union (9);
- opposing seals supporting said obturator (3a); and
- a rod (5) for rotational operating said obturator (3a), said operator being provided with an associated external operating handle (7);
**characterized** in that
- the valve body (1) is elbow-shaped;
- the additional hole (11) also being arranged perpendicularly relative to the axis of rotation of the obturator (3); and
- said obturator (3) can be rotated such, that said additional hole (11) is directly connected with the outlet union (8), whereby the fluid entering the inlet union (8) passes into said through-hole (3a) and from said through-hole (3a) into the outlet union (9) via said additional hole (11).

4. Ball valve according to claim 1 or 3, characterized in that externally on the neck portion of the valve body (1), there is provided an end-of-travel rib (13) cooperating with two end-of-travel shoulders (14) formed on the inside of a handle (7) in the form of a pommel grip which has, on its front visible side, three markings, offset respectively by 90° and indicating, with reference to a read-off point (15), notch or the like provided, for example, on the valve body (1), the real position of the spherical obturator (3).

5. Assembly for regulating the throughput of fluids, **characterized** in that it comprises two or more spherical valves (A,B) according to one or more of the preceding claims 1 to 4, connected in series.

6. Use of the ball valves (A,B) according to one or more of the preceding claims as flow regulator valves and cocks.

## Patentansprüche

1. Kugelventil, enthaltend:
- einen Ventilkoerper (1) mit einer innenliegenden Kammer zur Aufnahme eines kugelfoermigen Absperrgliedes (3), wobei das Absperrglied (3) mit einer Durchgangsbohrung (3a) und mit einer zusaetzlichen Bohrung (11) zur verminderten Zufuehrung versehen ist, und wobei die zusaetzliche Bohrung (11) senkrecht zur genannten Durchgangsbohrungs (3a) angeordnet ist, einen kleineren Durchmesser gegenueber dem Durchmesser der Durchgangsbohrung (3a) aufweist und diese letztere mit der Aussenflaeche des kugelfoermigen Absperrgliedes (3) verbindet;
- einen Zuflußstutzen (8) und einen Auslaßstutzen (9);
- sich gegenueberliegende Dichtungen zur Aufnahme des Absperrgliedes (3a);
- eine Stange (5) fuer den Drehantrieb des Absperrgliedes (3a), wobei die Stange (5) mit einem von aussen betaetigbaren Handgriff (7) verbunden ist; und
- wenigstens eine Oeffnung (12) im Ventilkoerper (1), die die Dichtung des Absperrgliedes am Zuflußstutzen (8) umgeht,
**dadurch gekennzeichnet,** dass
- der Ventilkoerper (1) gerade ausgebildet ist;
- die zusaetzliche Bohrung (11) ebenfalls senkrecht gegenueber der Drehachse des Absperrgliedes (3) angeordnet ist, und
- das Absperrglied (3) derartig verdrehbar ist, dass die zusaetzliche Bohrung (11) direkt mit dem Auslaßstutzen (9) verbunden ist, wodurch die in den Zuflußstutzen (8) einfliessende Fluessigkeit durch die wenigstens eine Oeffnung (12) in die Durchgangsbohrung (3a) dringt, die in einer Querlage gegenueber der Flussrichtung angeordnet ist und von dieser Durchgangsbohrung (3a) die Fluessigkeit ueber die Zusatzbohrung (11) in den Auslaßstutzen (9) dringt.

2. Kugelventil nach Patentanspruch 1**, dadurch** **gekennzeichnet****,** dass vier Oeffnungen (12) vorgesehen sind, die die benachbarte Dichtung (4) des kugelfoermigen Absperrgliedes (3) am Zuflußstutzen (8) umgehen.

3. Kugelventil, enthaltend:
- einen Ventilkoerper (1) mit einer innenliegenden Kammer zur Aufnahme eines kugelfoermigen Absperrgliedes (3), wobei das Absperrglied (3) mit einer winkelfoermig ausgebildeten Durchgangsbohrung (3a) sowie mit einer zusaetzlichen Bohrung (11) zur verminderten Zuführung versehen ist; wobei die zusaetzliche Bohrung (11) senkrecht zur genannten Durchgangsbohrung (3a) angeordnet ist, einen kleineren Durchmesser gegenueber dem Durchmesser der Durchgangsbohrung (3a) aufweist und diese letztere mit der Aussenflaeche des kugelfoermigen Absperrgliedes (3) verbindet;
- einen Zuflußstutzen (8) und einen Auslaßstutzen (9);
- sich gegenueberliegende Dichtungen zur Lagerung des Absperrgliedes (3a); und
- eine Stange (5) fuer den Drehantrieb des Absperrgliedes (3a), wobei die Stange mit einem von aussen betaetigbaren Handgriff (7) verbunden ist,
**dadurch gekennzeichnet,**
- dass der Ventilkoerper (1) ellbogenfoermig ausgebildet ist;
- die Zusatzbohrung (11) ebenfalls senkrecht gegenueber der Drehachse des Absperrgliedes (3) angeordnet ist; und
- das Absperrglied (3) derartig gedreht werden kann, dass die zusaetzliche Bohrung (11) direkt mit dem Zuflußstutzen (8) verbunden ist, wodurch die in den Zuflußstutzen (8) einlaufende Fluessigkeit durch die Durchgangsbohrung (3a) und von dieser Durchgangsbohrung (3a) in den Auslaßstutzen (9) ueber die genannte zusaetzliche Bohrung (11) fliesst.

4. Kugelventil nach Patentanspruch 1 oder 3, **dadurch gekennzeichnet,** dass auf der Aussenseite des Halsteiles des Ventilkoerpers (1) ein Bewegungsendanschlag (13) vorgesehen ist, der mit zwei Bewegungsbegrenzungsanschlaegen (14) zusammenarbeitet, die an der Innenseite eines Handgriffes (7) in Form eines Ballengriffes vorgesehen sind, der an ihrer sichtbaren Vorderseite drei Markierungen aufweist, die um 90° versetzt angeordnet sind und unter Bezugnahme auf einen Ablesepunkt (15), Zahn oder aehnliches, der zum Beispiel am Ventilkoerper (1) vorgesehen ist, die tatsaechliche Position des kugelfoermigen Absperrgliedes (3) anzeigen.

5. Aggregat zum Einregulieren des Durchlaufs von Fluessigkeiten, **dadurch gekennzeichnet,** dass es zwei oder mehrere Kugelventile (A,B), entsprechend einem oder mehrerer der vorangegangen Ansprueche 1 bis 4, enthaelt, die in Serie geschaltet sind.

6. Verwendung der Kugelventile (A,B) nach einem oder mehreren der vorangegangenen Ansprueche als Flussregulierventile und -haehne.

## Revendications

1. Soupape sphérique comprenant:
- un corps de soupape (1) qui présente intérieurement une chambre contenant un obturateur sphérique (3); ledit obturateur (3) étant pourvu d'un trou passant (3a) et d'un trou supplémentaire (11) pour une alimentation réduite; ledit trou supplémentaire (11) étant disposé perpendiculairement par rapport audit trou passant (3a), ayant un diamètre plus petit comparé au diamètre dudit trou passant (3a) et reliant ce dernier à la surface extérieure de l'obturateur sphérique (3);
- un raccord (8) d'entrée de fluide et un raccord (9) de sortie de fluide;
- des joints opposés supportant ledit obturateur (3);
- une tige (5) pour commander la rotation dudit obturateur (3), ladite commande (5) étant pourvue d'une poignée de manoeuvre (7) extérieure associée; et
- au moins une ouverture (12) dans ledit corps de soupape (1) contournant le joint de l'obturateur sur ledit raccord (8) d'entrée de fluide,
caractérisée en ce que
- le corps de soupape (1) est droit;
- le trou supplémentaire (11) est également disposé perpendiculairement par rapport à l'axe de rotation de l'obturateur (3); et
- ledit obturateur (3) peut être tourné de telle sorte que le trou supplémentaire (11) soit directement relié au raccord de sortie (9), avec le résultat que le fluide pénétrant dans le raccord d'entrée (8) passe à travers ladite au moins une ouverture (12) jusque dans ledit trou passant (3a), situé dans une position transversale par rapport à la direction de l'écoulement, et dudit trou passant (3a) jusque dans le raccord de sortie (9) via ledit trou supplémentaire (11).

2. Soupape sphérique suivant la revendication 1, caractérisée en ce qu'il est prévu, du côté (8) de l'entrée du fluide, quatre ouvertures (12) contournant le joint adjacent (4) de l'obturateur sphérique (3).

3. Soupape sphérique, comprenant
- un corps de soupape (1) qui présente intérieurement une chambre contenant un obturateur sphérique (3); ledit obturateur (3) étant pourvu d'un trou passant coudé (3a) et d'un trou supplémentaire (11) pour une alimentation réduite; ledit trou supplémentaire (11) étant disposé perpendiculairement par rapport audit trou passant (3a), ayant un diamètre petit comparé au diamètre dudit trou passant (3a) et reliant ce dernier à la surface extérieure de l'obturateur sphérique (3);
- un raccord (8) d'entrée de fluide et un raccord (9) de sortie de fluide;
- des joints opposés supportant ledit obturateur (3); et
- une tige (5) pour commander la rotation dudit obturateur (3), ladite commande (5) étant pourvue d'une poignée de manoeuvre (7) extérieure associée;
caractérisée en ce que
- le corps de soupape (1) est coudé;
- le trou supplémentaire (11) est également disposé perpendiculairement par rapport à l'axe de rotation de l'obturateur (3); et
- ledit obturateur (3) peut être tourné de telle sorte que le trou supplémentaire (11) soit directement relié au raccord de sortie (9), avec le résultat que le fluide pénétrant dans le raccord d'entrée (8) passe dans ledit trou passant (3a), et dudit trou passant (3a) jusque dans le raccord de sortie (9) via ledit trou supplémentaire (11).

4. Soupape sphérique suivant la revendication 1 ou 3, caractérisée en ce que, extérieurement sur la partie de col du corps de soupape (1), il est prévu une nervure de fin de course (13) coopérant avec deux épaulements de fin de course (14) formés sur la face intérieure d'une poignée (7) ayant la forme d'une poignée à pommeau qui a, sur sa face d'extrémité visible, trois marques, respectivement décalées de 90° et indiquant, par rapport à une origine figurée par un point (15), une encoche ou analogue prévue par exemple sur le corps de soupape (1), la position réelle de l'obturateur sphérique (3).

5. Ensemble de régulation du débit d'un fluide, caractérisé en ce qu'il comprend deux ou plus de deux soupapes sphériques (A, B) suivant une ou plusieurs des revendications précédentes 1 à 4, raccordées en série.

6. Utilisation des soupapes sphériques (A, B) suivant une ou plusieurs des revendications précédentes, en guise de soupapes et de robinets de régulation.
